Europäisches Patentamt

European Patent Office

Office européen des brevets

(19)

(11) Veröffentlichungsnummer : **0 540 570 B1**

# (12) EUROPÄISCHE PATENTSCHRIFT

(45) Veröffentlichungstag der Patentschrift :
**19.10.94 Patentblatt 94/42**

(51) Int. Cl.$^5$ : **G06F 3/023, H04M 1/274**

(21) Anmeldenummer : **91913013.8**

(22) Anmeldetag : **18.07.91**

(86) Internationale Anmeldenummer :
**PCT/EP91/01355**

(87) Internationale Veröffentlichungsnummer :
**WO 92/01983 06.02.92 Gazette 92/04**

(54) **VERFAHREN ZUR DURCHFÜHRUNG EINES VARIABLEN DIALOGS MIT TECHNISCHEN GERÄTEN.**

(30) Priorität : **21.07.90 DE 4023318**

(43) Veröffentlichungstag der Anmeldung :
**12.05.93 Patentblatt 93/19**

(45) Bekanntmachung des Hinweises auf die
Patenterteilung :
**19.10.94 Patentblatt 94/42**

(84) Benannte Vertragsstaaten :
**DE ES FR GB IT SE**

(56) Entgegenhaltungen :
**EP-A- 0 330 944
HUMAN FACTORS IN COMPUTING SY-
STEMS-III, PROC. OF THE CHI'86 CONFE-
RENCE, APRIL 13-17, 1986 BOSTON, MA, USA
PAGES 16-23; G.W. FURNAS: GENERALIZED
FISHEYE VIEWS**

(73) Patentinhaber : **ROBERT BOSCH GMBH
Postfach 30 02 20
D-70442 Stuttgart (DE)**

(72) Erfinder : **GEISER, Georg
Reinhold-Schneider-Str. 71 h
D-7500 Karlsruhe 51 (DE)**

## Beschreibung

Die Erfindung betrifft ein Verfahren und eine Vorrichtung zur Abwicklung des Dialogs des Benutzers mit einem technischen Gerät, z. B. einem Telekommunikationsendgerät, einem Navigationssystem im Kraftfahrzeug oder einem Videorecorder, wodurch eine Anpassung des Dialogs an Bedürfnisse des Benutzers (z. B. Vorkenntnisse, Übung) ermöglicht wird. Als Dialog wird hier der wechselseitige Informationsaustausch zwischen dem Benutzer und einem technischen Gerät bezeichnet. Gemeint sind hier solche Geräte, deren Funktionsspektrum so umfangreich und komplex ist, daß ihre Benutzung zumindest für manche Benutzer Probleme aufwirft.

## Stand der Technik

Die Benutzerfreundlichkeit eines technischen Gerätes wird durch die Gestaltung des Dialogs zwischen dem Benutzer und dem Gerät bestimmt. Benutzer eines technischen Gerätes unterscheiden sich in vielerlei Hinsicht: Vorkenntnisse, Fähigkeiten, Übung, Präferenzen. Auch ein und derselbe Benutzer weist unterschiedliche Eigenschaften auf, wenn er zu verschiedenen Zeitpunkten mit einem Gerät interagiert, z. B. kann ein geübter Benutzer nach einer längeren Pause wieder in den Zustand des ungeübten zurückkehren.

Es ist bekannt, daß ungeübte Benutzer eine andere Form der Dialoggestaltung benötigen als geübte. Man weiß ferner im Prinzip, wie die Anforderungen an die Dialoggestaltung für die beiden Benutzerklassen lauten. Ungeübte Benutzer benötigen eine schrittweise Führung (serieller Dialog); außerdem ist ihnen meist zu vermitteln, wie das Funktionsspektrum des Gerätes und die damit lösbaren Aufgaben aussehen. Geübte Benutzer dagegen wünschen einen schnellen Zugriff auf das ihnen bekannte Funktionsspektrum (paralleler Dialog). Menüdialog, ergänzt mit Tutor- und Hilfefunktionen, ist daher eine geeignete Dialogform für ungeübte Benutzer, während der geübte mit dem Funktionstastendialog besser zurechtkommt.

Es gibt keine Dialogform, die sowohl den Anforderungen der ungeübten als auch der geübten Benutzer gerecht wird. Daraus folgt, daß der Dialog nicht starr, sondern flexibel zu gestalten ist, indem der Dialog an den Benutzer angepaßt wird. Es sind zwei Möglichkeiten zur Anpassung des Dialogs an die Bedürfnisse des Benutzers bekannt: adaptierbare und adaptive Dialoge. Beim adaptierbaren Dialog übernimmt es der Benutzer, durch eigene Entscheidungen Einfluß auf die Dialogform zu nehmen, um sie so an seine Bedürfnisse anzupassen. Voreinstellungen des Dialogs, die beim Einschalten des Gerätes wirksam werden ("Defaults"), können unterstützend wirken. Ein bekanntes Verfahren ist das sog. Benutzerprofil, das dem Benutzer erlaubt, z. B. Schriftfont, Schriftgröße, Fensterabmessungen einzustellen. Dagegen läuft beim adaptiven Dialog diese Anpassung ohne Zutun des Benutzers automatisch ab. Voraussetzung für letztgenannte Anpassungsform ist, daß im technischen Gerät Wissen über den Benutzer verfügbar ist. Die Gestaltung adaptiver Dialoge ist Gegenstand der Forschung und wird im folgenden nicht betrachtet.

Aus EP-A-0 330 944 ist es bekannt, die Detaillierung der auf dem Bildschirm dargestellten Funktionen von der Antwortszeit des Benutzers abhängig zu machen.

Für die Darstellung von Information auf einem Bildschirm, hat ferner Furnas 1986 mit der Fischauge-Organisation eine adaptierbare Darstellungsform vorgeschlagen (Furnas, G.W.: Generalized Fisheye Views. Human Factors in Computing Systems - III, Proc. of the CHI '86 Conference, Boston, MA, USA, April 13-17, 1986, seiten 16-23). Das Ziel der Fischauge-Organisation ist, mit einer einzigen Darstellungsform ein ausgewogenes Verhältnis zwischen der Darstellung von lokalem Detail und globalem Kontext auf einem Bildschirm zu finden. In Analogie zu einem extremen Weitwinkelobjektiv ("Fischaugenlinse") liegt im Zentrum der Betrachtung (z. B. um den augenblicklichen Fixationspunkt herum) eine detailreiche Darstellung vor und dennoch wird nicht auf die Abbildung der umliegenden "Welt" verzichtet, indem mit zunehmendem Abstand vom Zentrum immer weniger Details gezeigt werden.

Zur formalen Beschreibung einer Fischauge-Organisation definiert Furnas 1986 eine Funktion, welche die Relevanz jedes Elementes einer zweidimensionalen Informationsstruktur festlegt. Aufgrund dieser Relevanz wird dann entschieden, ob ein Element zur Anzeige kommt. Die Relevanz setzt sich zusammen aus zwei Komponenten, der a priori-Wichtigkeits- und der Distanzbewertung. Die additive Form der Relevanzfunktion lautet:

$$R(x,y;x_o,y_o) = W(x,y) - D(x - x_o, y - y_o), \quad (1)$$

mit $R(x,y;x_o,y_o)$ als der Relevanzfunktion, die den Grad der Relevanz angibt, den ein Punkt $(x,y)$ besitzt, wenn der momentane Fixationspunkt $(x_o,y_o)$ ist. $W(x,y)$ ist die a priori-Wichtigkeit des Punktes $(x,y)$ und $D(x-x_o,y-y_o)$ gibt an, wie die Wichtigkeit des Punktes $(x,y)$ mit zunehmendem Abstand vom Fixationspunkt $(x_o,y_o)$ abnimmt. Mit Fixationspunkt wird hier das Zentrum der Betrachtung auch im übertragenen Sinne bezeichnet; ebenso kann die Distanzbewertung nicht nur aufgrund geometrischer, sondern auch aufgrund logischer Entfernungen erfolgen. Diese Definition der Relevanz erfordert Wichtigkeits- und Distanzbewertung nur auf dem Ordinalskalenniveau.

Für die Darstellung auf einer optischen Anzeige wird eine Schwelle k eingeführt, und es werden nur diejenigen Punkte angezeigt, für die

$$R(x,y;x_o,y_o) > k \quad (2)$$

ist.

Im folgenden wird das Fischauge-Prinzip anhand einer Baumstruktur erläutert. Bei einer Baumstruktur ergibt sich die Distanzbewertung $D(x,x_o)$ bei einem gegebenen Fixationspunkt $x_o$ als Abstand $d(x,x_o)$ zwischen x und $x_o$ im Baum. Die a priori-Wichtigkeitsbewertung $W(x)$ ist der Abstand von der Wurzel w der Baumstruktur $-d(x,w)$. Als Relevanzfunktion erhält man

$$R(x;x_o) = - d(x,w) - d(x,x_o) \quad (3)$$

Durch Wahl der Schwelle k werden Fischauge-Darstellungen unterschiedlicher Größe erhalten. Durch die Schwelle k läßt sich somit der Umfang der aus der Baumstruktur ausgewählten Information beeinflussen. Der Umfang der ausgewählten Information wird im folgenden - auch im übertragenen Sinne - als Gesichtsfeldgröße bezeichnet. Diese Auswahl wird in Abhängigkeit von der a priori-Wichtigkeit und der Distanz vom momentanen Fixationspunkt getroffen. Neben der Schwelle k bietet sich eine zweite Möglichkeit zur Anpassung des Informationsangebotes durch Wahl des Fixationspunktes.

Mit der Fischauge-Organisation der Information ist zwar ein Weg zur adaptierbaren Darstellung von Information aufgezeigt, es fehlt aber an Verfahren zur adaptierbaren Gestaltung des gesamten Dialoges, der neben der Darstellung auch die Eingabe von Information durch den Benutzer umfaßt. Hinzu kommt als weitere wichtige Forderung, daß zwischen den Ausprägungsformen anpaßbarer Dialoge nicht abrupte, sondern gleitende oder wenigstens stufenförmige Übergänge vorhanden sein müssen, damit die allmähliche Veränderung des Benutzers, z. B. vom Zustand des Ungeübten zu dem des Geübten, unterstützt wird.

## Beschreibung der Erfindung

Erfindungsgemäß wird ein Verfahren gemäß Anspruch 1 vorgeschlagen und eine Umsetzung in eine Vorrichtung gemäß Anspruch 6 angegeben, wodurch die Realisierung eines adaptierbaren Dialogs mit stufenweisem Übergang zwischen spezialisierten Dialogvarianten ermöglicht wird. Die Basis dieses Vorschlages ist das oben beschriebene "Fischauge-Prinzip" für Darstellung von Information.

Das Funktionsangebot eines technischen Gerätes läßt sich als Baumstruktur darstellen. Daher kann das zur Informationsdarstellung vorgeschlagene Fischauge-Prinzip verwendet werden, um ein vom Benutzer gesteuertes Verfahren und eine Vorrichtung zur Anpassung des Dialogs zu entwickeln. Der Benutzer hat zwei Freiheitsgrade zur Anpassung: Umfang der parallel dargebotenen und zugreifbaren Funktionen (Gesichtsfeldausdehnung) und Lage des momentanen Interessenschwerpunktes (Fixationspunkt). Die Lage des Fixationspunktes kann durch Voreinstellung auf den bei der Benutzung am häufigsten vorkommenden Bereich gelegt werden. Eine weitere Art der Voreinstellung ist die Wahl eines möglichst hohen Wertes der Schwelle k, um so nur diejenige Funktion anzubieten, auf die der Fixationspunkt gerichtet ist. Auf diese Weise wird dem ungeübten Benutzer Rechnung getragen, da er nur eine sehr einfache Dialoggestaltung vorfindet. Zur späteren Anpassung des Dialogs an seine Bedürfnisse benötigt der Benutzer Eingabeelemente für den Fixationspunkt und für die Schwelle k.

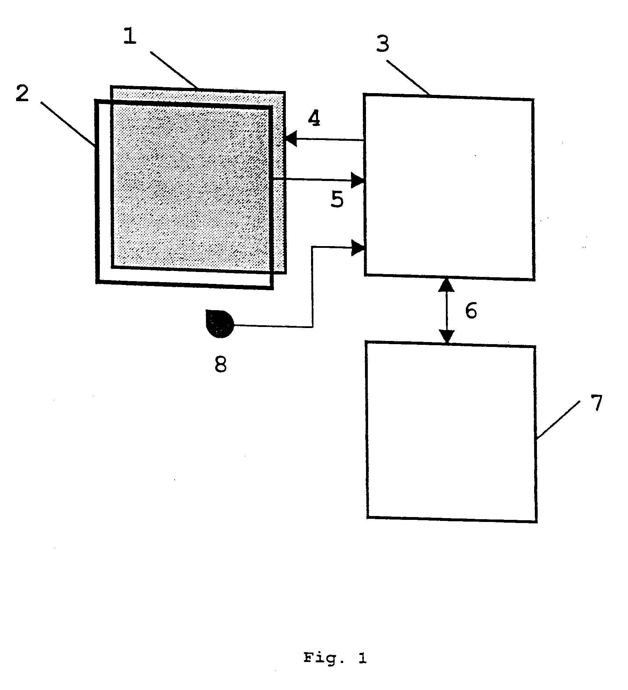

Fig. 1 zeigt das Blockschaltbild des adaptierbaren Dialogsystems. Auf dem Bildschirm 1 werden die Funktionen mit den zugehörigen Berührfeldern dargestellt, die mit der Berühreingabe 2 aktiviert werden können. Die Dialogsteuereinheit 3 verarbeitet die darzustellenden (4) und die eingegebenen (5) Informationen. Sie steuert ferner den Informationsaustausch 6 mit dem technischen Gerät 7. Mit dem Eingabeelement 8 gibt der Benutzer durch Verändern der Schwelle k die relative Größe des Gesichtsfeldes an und wählt damit den Umfang des von der Dialogsteuereinheit 3 zur Darstellung freigegebenen Funktionsangebotes.

## Vorteile der Erfindung

Der Benutzer hat die Möglichkeit, seinen Wünschen entsprechend das Ausmaß der parallel dargebotenen und zugreifbaren Funktionen zu bestimmen. Für den ungeübten Benutzer ergibt sich zunächst bei Beginn des Dialogs durch Voreinstellung auf häufig benötigte Grundfunktionen ein erleichterter Einstieg in die Benutzung eines Gerätes. Durch Ausblendung nicht relevanter Funktionen in Abhängigkeit von deren a priori-Wichtigkeit und deren Abstand vom momentanen Interessenschwerpunkt ergibt sich eine Vereinfachung des Dialogs. Ein weiterer Vorteil des Ausblendens von Funktionen besteht darin, daß damit Platz auf der Anzeige für Informationen geschaffen wird, die dem ungeübten Benutzer ihm bisher unbekannte Konzepte für die Benutzung von Funktionen vermitteln und ihm Hilfe bei ihrer Benutzung bieten. Die Entwicklung in Richtung eines Benutzers mit zunehmender Übung wird dadurch gefördert, daß der Benutzer durch schrittweises Erhöhen der Größe des Gesichtsfeldes zusätzliche Funktionen einbeziehen kann. Der geübte Benutzer hat den Vorteil, daß er durch Wahl eines großen Gesichtsfeldes einen wahlfreien Zugriff auf ein paralleles Funktionsangebot erhält. Andererseits kann er bei Verlust der Übung wieder von der Verengung und von der schrittweisen Erweiterung des Gesichtsfeldes Gebrauch machen. Ein gesondertes Eingabeelement kann zur Auswahl des anfänglichen Fixationspunktes vorgesehen werden, mit dem der Benutzer einen Fixationspunkt bestimmen kann, den er zu Beginn der Benutzung eines Gerätes vorfinden möchte. Dazu ist es allerdings notwendig, daß der Benutzer sich namentlich bei dem Gerät anmeldet.

**Ausführungsbeispiel**

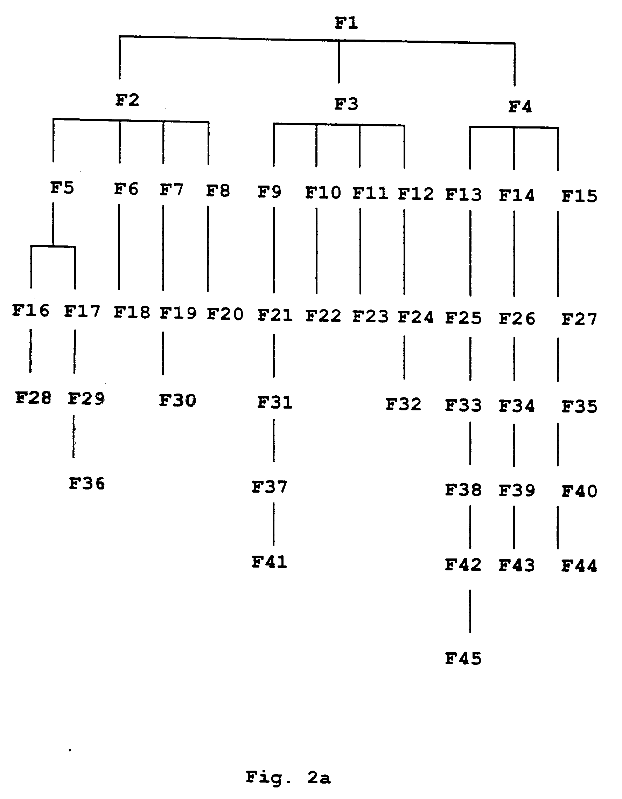

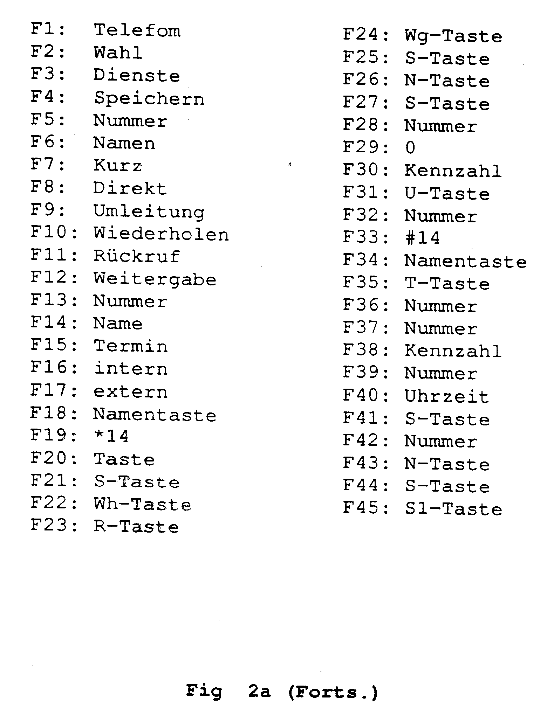

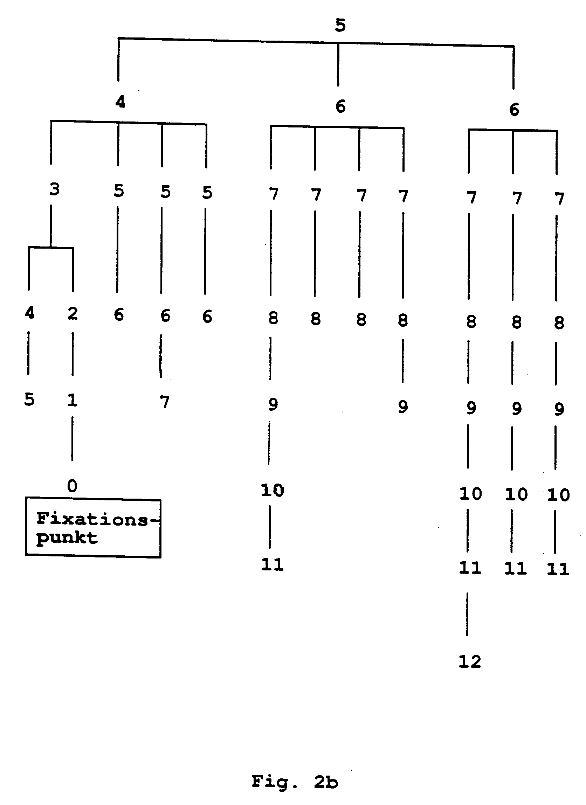

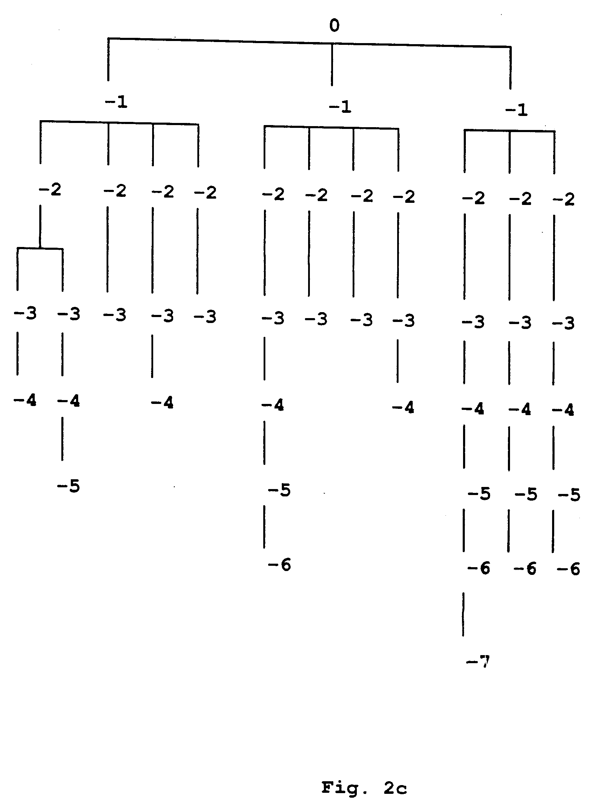

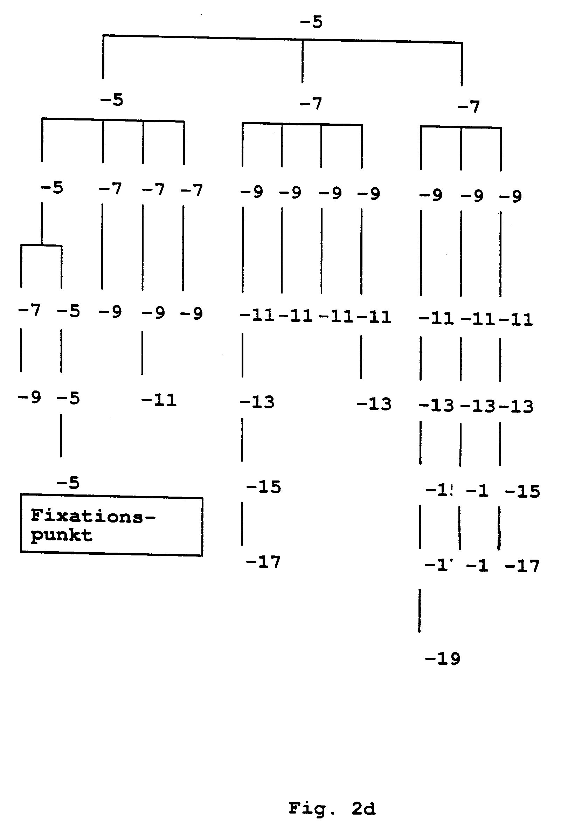

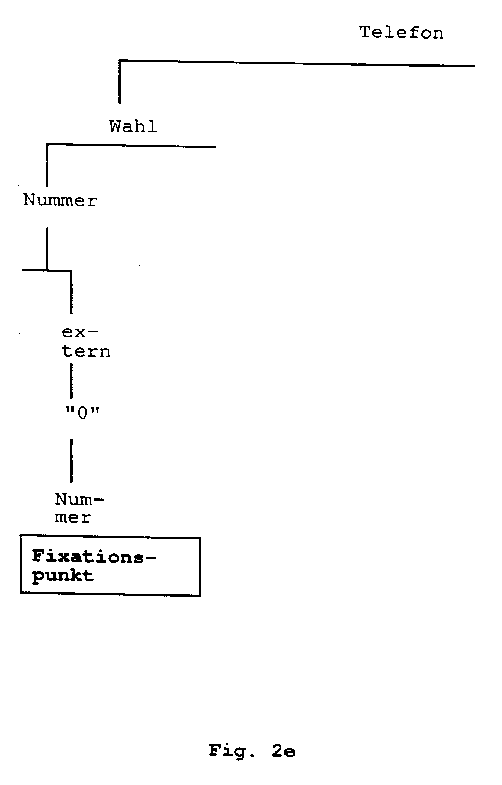

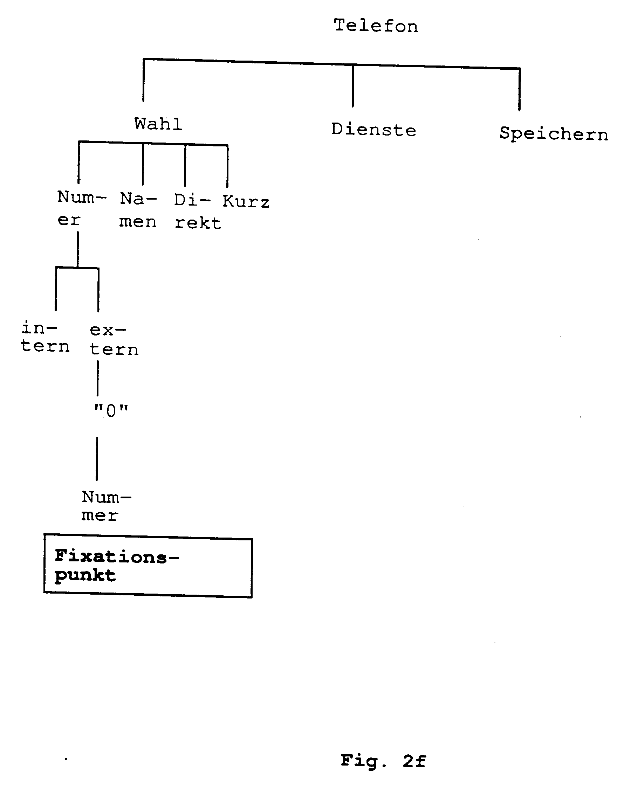

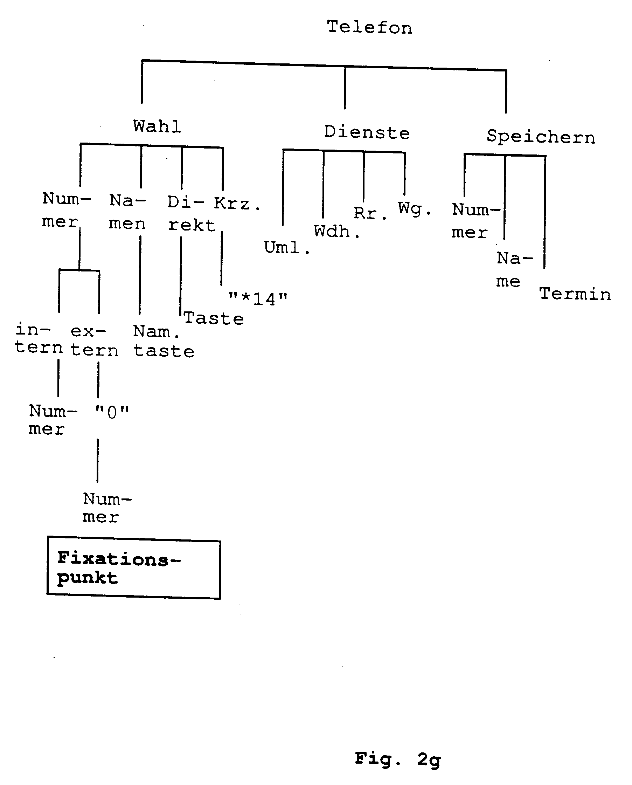

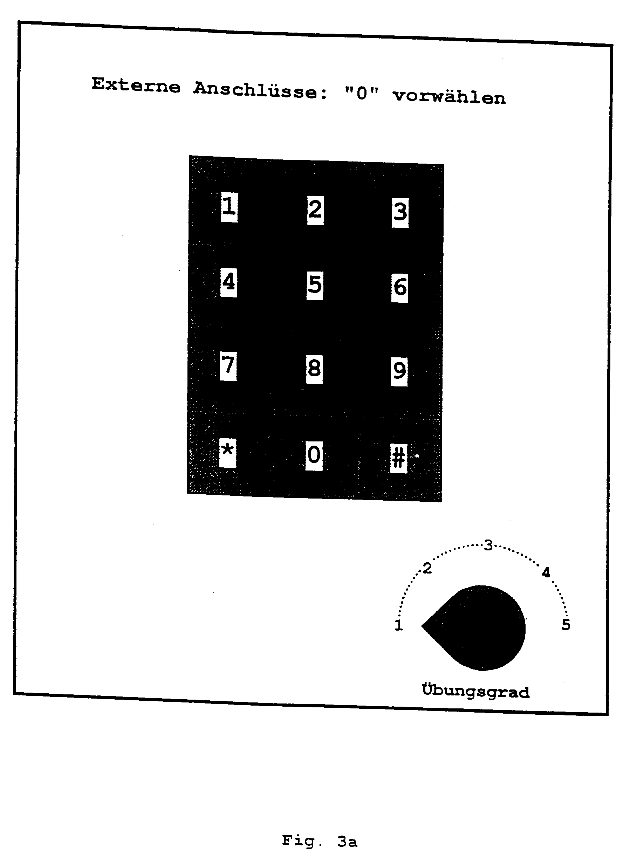

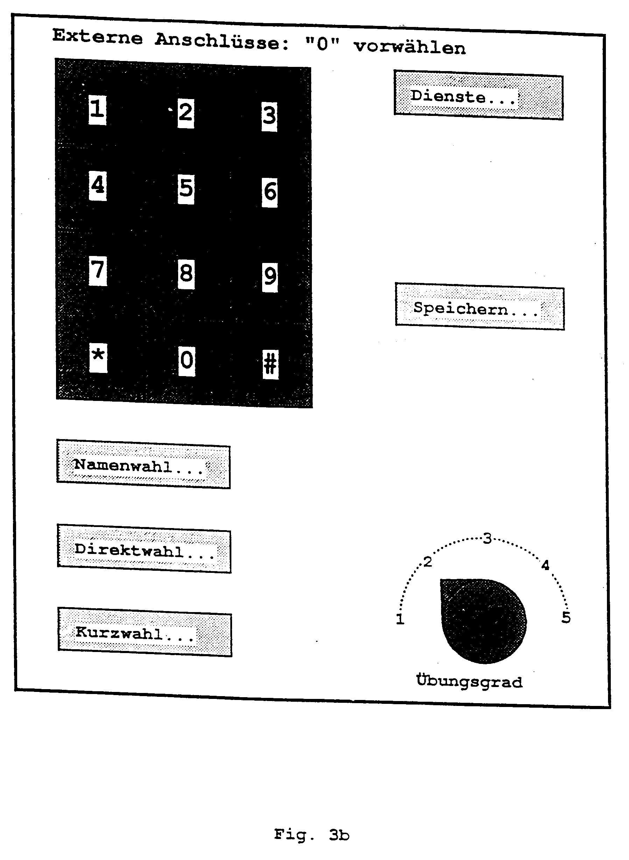

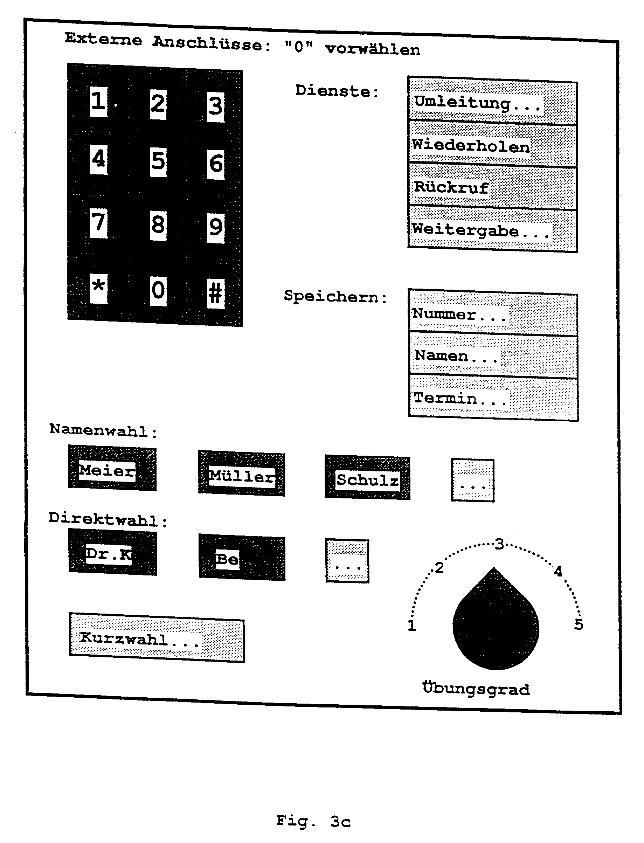

Als Ausführungsbeispiel wird im folgenden der Dialog mit einem Telefon betrachtet. Fig. 2a gibt den Dialogbaum wieder. Als fester Fixationspunkt wird im weiteren die Nummernwahl extern angenommen. In Fig. 2b ist die Distanzbewertung und in Fig. 2c die Wichtigkeitsbewertung eingetragen. Fig. 1d enthält die daraus resultierende Relevanzbewertung. Die durch Wahl der Schwellen k = -6, -8, -10 sich ergebenden Fischauge-Darstellungen sind in Fig. 2e-g wiedergegeben. Die Umsetzung dieser Fischauge-Darstellungen in einen adaptierbaren Dialog zeigen Fig. 3a-c. Voraussetzungen für die Realisierung des adaptierbaren Dialogs gemäß dem Beispiel von Fig. 3a-c sind eine flexible Anzeige, z. B. ein Bildschirm, und eine flexible Eingabe, z. B. eine Berühreingabe. Die gerasterten Felder stellen Eingabeelemente dar, z. B. Berührfelder eines Berührbildschirmes. Als Bezeichnung des Eingabeelementes für die Veränderung der Größe des Gesichtsfeldes wurde "Übungsgrad" gewählt. Die Umschaltung zwischen diesen Dialog-Ansichten erfolgt mit diesem Eingabeelement. Eine weitere Realisierungsmöglichkeit der Eingabe sind programmierbare Tasten, deren momentane Belegung auf dem Bildschirm angezeigt wird. Der Fixationspunkt verlagert sich mit dem Anwählen von Funktionen. Die Abspeicherung eines speziellen Fixationspunktes für spätere Wiederbenutzung des Gerätes kann durch ein separates, nicht abgebildetes Eingabeelement erfolgen.

**Patentansprüche**

1. Verfahren zur Durchführung eines variablen Dialogs mit technischen Geräten, die eine Anzeige und eine Eingabe mittels Eingabeelementen aufweisen, und wobei die Relevanz der dargestellten Informationen nach der Formel Relevanzfunktion $R(x,y;x_o,y_o)$ = Wichtigkeit am Punkt $(x,y)$ abzüglich Abnahme D der Wichtigkeit vom Ort des Fixationspunktes $x_o, y_o(D(x-x_o,y-y_o))$ bewertet wird und ein Schwellwert k die Menge der dargestellten Information festlegt, **dadurch gekennzeichnet,** daß für eine Eingabeoperation mittels eines oder mehrerer mehrstufiger Eingabeelemente die Menge der parallel dargestellten Informationen und der dargestellten und zugreifbaren Funktionen mittels eines manuellen Schwellwertgebers, der den Übungsgrad des Benutzers angibt, auswählbar ist, wobei der Schwellwert in beliebiger Höhe und beliebig oft einstellbar ist.

2. Verfahren nach Anspruch 1,
**dadurch gekennzeichnet,**
daß als Anzeige ein Bildschirm und als Eingabe ein Berührschirm verwendet werden.

3. Verfahren nach Anspruch 1,
**dadurch gekennzeichnet,**
daß als Anzeige ein Bildschirm und als Eingabe programmierbare Tasten verwendet werden.

4. Verfahren nach den Ansprüchen 1 - 3,
**dadurch gekennzeichnet,**
daß benutzerseitig mit einem mehrstufigen Eingabeelement die Ausdehnung des Gesichtsfeldes und damit den Umfang des parallel dargebotenen Funktionsumfanges auswählbar ist.

5. Verfahren nach den Ansprüchen 1 - 4
**dadurch gekenzeichnet,**
daß benutzerseitig mit einem Eingabeelement der Fixationspunkt zu Beginn der Wiederbenutzung des Gerätes bestimmbar ist.

6. Vorrichtung zur Durchführung des Verfahrens nach den Ansprüchen 1 - 5 mit einem Bildschirm und Eingabeeinrichtungen sowie einer Steuereinheit,
**dadurch gekennzeichnet,**
daß ein Eingabeelement (8) vorgesehen ist, mittels dessen über einen Schwellwertgeber die Menge der auf dem Bildschirm darzustellenden Informationen und der dargestellten und zugreifbaren Funktionen mittels der Bildschirmeingabe (2) oder einer Tastatur dem Umfang nach mittels einer Steuereinheit (3) steuerbar sind, und die Steuereinheit (3) die vom Benutzer ausgewählten Funktionen (5) dem technischen Gerät (7) übermittelt.

**Claims**

1. A process for carrying out a variable dialog with technical equipment which has a display and an input by means of input elements, the relevance of the represented information being evaluated according to the formula relevance function $R(x,y;x_o,y_o)$ = significance of the point $(x,y)$ minus reduction D in the significance at the location of the fixed point $x_o,y_o(D(x-x_o,y-y_o))$ and a threshold value k determining the amount of information represented, wherein the amount of information represented in parallel and the represented and accessible functions for an input operation using one or more multi-stage input elements can be selected by means of a manual threshold value transmitter which specifies the degree of practice of the user, it being possible to adjust the threshold value to any desired level as often as desired.

2. The process as claimed in claim 1, wherein a screen is used as display and a touch screen is used as input.

3. The process as claimed in claim 1, wherein a screen is used as display and programmable keys are used as input.

4. The process as claimed in claims 1-3, wherein the extent of the viewing field and thus the size of the range of functions represented in parallel can be selected on the user side with a multi-stage input element.

5. The process as claimed in claims 1-4, wherein the fixed point can be determined at the start of the re-use of the equipment on the user side using an input element.

6. A device for carrying out the process as claimed in claims 1-5 with a screen and input devices and a control unit, wherein an input element (8) is provided by means of which the amount of information to be represented on the screen and the represented and accessible functions can be controlled via a threshold value transmitter by means of the screen input (2) or a keyboard in accordance with the range by means of a control unit (3), and the control unit (3) transmits to the technical equipment (7) the functions (5) selected by the user.

**Revendications**

1. Procédé pour effectuer un dialogue variable avec des appareils techniques qui comportent des moyens d'affichage et des moyens d'entrée à l'aide d'éléments d'entrée et dont la caractéristique déterminante des informations représentées est exploitée selon la formule de la fonction caractéristique $R(x,y;x_o,y_o)$ = pondération du point $(x,y)$ diminué de la diminution D de la pondération du lieu du point de fixation $x_o$, $y_o(D(x-x_o,y-y_o))$ et avec un seuil k on fixe la quantité de l'information représentée, caractérisé en ce que : pour une opération d'entrée à l'aide d'un ou plusieurs éléments d'entrée à plusieurs niveaux on sélectionne la quantité des informations représentées en parallèle et des fonctions accessibles et représentées, à l'aide d'un générateur manuel de seuil qui indique le degré d'exercice de l'utilisateur, le seuil se réglant à un niveau quelconque et de façon répétée, quelconque.

2. Procédé selon la revendication 1, caractérisé en ce que : comme affichage on a un écran image et comme moyen d'entrée un écran tactile.

3. Procédé selon la revendication 1, caractérisé en ce que comme moyen d'affichage on a un écran image et comme moyen d'entrée des touches programmables.

4. Procédé selon l'une des revendications 1 à 3, caractérisé en ce que du côté du l'utilisateur, avec un élément d'entrée à plusieurs niveaux, on sélectionne l'extension du champ de vue et ainsi l'importance des fonctions offertes en parallèle.

5. Procédé selon l'une des revendications 1-4, caractérisé en ce que du côté de l'utilisateur, avec un élément d'entrée, on détermine le point de fixation au début de la réutilisation de l'appareil.

6. Dispositif pour la mise en oeuvre du procédé selon les revendications 1 à 5 avec un écran image et des dispositifs d'entrée ainsi qu'une unité de commande, caractérisé en ce qu'il comprend un élément d'entrée (8) à l'aide duquel et par un générateur de valeur de pondération on détermine la quantité des informations à représenter sur un écran image et les fonctions accessibles à l'aide de l'entrée à l'écran image (2) ou d'un clavier pour définir l'importance à l'aide d'une unité de commande (3) et cette unité de commande (3) transmet, à l'appareil technique (7), les fonctions (5) choisies par l'utilisateur.

Fig. 1

Fig. 2a

F1:   Telefom
F2:   Wahl
F3:   Dienste
F4:   Speichern
F5:   Nummer
F6:   Namen
F7:   Kurz
F8:   Direkt
F9:   Umleitung
F10:  Wiederholen
F11:  Rückruf
F12:  Weitergabe
F13:  Nummer
F14:  Name
F15:  Termin
F16:  intern
F17:  extern
F18:  Namentaste
F19:  *14
F20:  Taste
F21:  S-Taste
F22:  Wh-Taste
F23:  R-Taste

F24:  Wg-Taste
F25:  S-Taste
F26:  N-Taste
F27:  S-Taste
F28:  Nummer
F29:  0
F30:  Kennzahl
F31:  U-Taste
F32:  Nummer
F33:  #14
F34:  Namentaste
F35:  T-Taste
F36:  Nummer
F37:  Nummer
F38:  Kennzahl
F39:  Nummer
F40:  Uhrzeit
F41:  S-Taste
F42:  Nummer
F43:  N-Taste
F44:  S-Taste
F45:  S1-Taste

**Fig  2a (Forts.)**

```
                                    5
        ┌───────────────────────────┼───────────────────────────┐
        4                           6                           6
   ┌────┬────┬────┐          ┌────┬────┬────┐          ┌────┬────┐
   3    5    5    5          7    7    7    7          7    7    7
 ┌─┴─┐  │    │    │          │    │    │    │          │    │    │
 4   2  6    6    6          8    8    8    8          8    8    8
 │   │       │               │              │          │    │    │
 5   1       7               9              9          9    9    9
     │                       │                         │    │    │
     0                      10                        10   10   10
┌──────────┐                │                          │    │    │
│Fixations-│               11                         11   11   11
│punkt     │                                           │
└──────────┘                                          12
```

Fig. 2b

Fig. 2c

Fig. 2d

Telefon

Wahl

Nummer

extern

"0"

Nummer

Fixationspunkt

Fig. 2e

Telefon

Wahl          Dienste        Speichern

Num-  Na-  Di-  Kurz
er    men  rekt

in-   extern  tern

"0"

Nummer

Fixationspunkt

Fig. 2f

Telefon

Wahl      Dienste      Speichern

Num-mer   Na-men   Di-rekt   Krz.    Uml.   Wdh.   Rr.   Wg.    Num-mer   Na-me   Termin

in-tern   ex-tern    Nam.taste    Taste    "*14"

Num-mer   "0"

Num-mer

**Fixations-punkt**

**Fig. 2g**

Externe Anschlüsse: "0" vorwählen

Fig. 3a

Externe Anschlüsse: "0" vorwählen

Fig. 3b

16

Externe Anschlüsse: "0" vorwählen

| | | |
|---|---|---|
| 1 | 2 | 3 |
| 4 | 5 | 6 |
| 7 | 8 | 9 |
| * | 0 | # |

Dienste:

Umleitung...

Wiederholen

Rückruf

Weitergabe...

Speichern:

Nummer...

Namen...

Termin...

Namenwahl:

Meier  Müller  Schulz  ...

Direktwahl:

Dr.K  Be  ...

Kurzwahl...

Übungsgrad

1 2 3 4 5

Fig. 3c